# EUROPEAN PATENT APPLICATION

(11) **EP 4 512 707 A1**
(43) Date of publication of application: **26.02.2025**
(21) Application number: 24195473.4
(22) Date of filing: 20.08.2024
(51) Int. Cl.: B62J 11/16, B62J 37/00, B62J 35/00, B62K 11/10, B62M 7/08

(54) **STRADDLE-TYPE VEHICLE**

(30) Priority: 24.08.2023 JP 2023136563
(71) Applicant: Suzuki Motor Corporation, Shizuoka 432-8611 (JP)
(72) Inventor: OZEKI, Hisashi, Shizuoka (JP)
(74) Representative: Haseltine Lake Kempner LLP

(57) **Abstract**

Provided is a straddle-type vehicle suitable for traveling by using combustion energy of gas fuel. The straddle-type vehicle travels by using gas fuel. The straddle-type vehicle includes a gas tank (61) configured to store a gas fuel, an engine (41) configured to be operated by combustion energy of the gas fuel, an exhaust system component (56) through which an exhaust gas discharged from the engine (41) flows, and a relief valve (67) configured to open when a pressure of the gas fuel rises to a predetermined pressure or more. The relief valve (67) has a discharge port (68) oriented downward. The exhaust system component (65) is disposed at one side of the straddle-type vehicle in a vehicle width direction, and the relief valve (67) is disposed at the other side of the straddle-type vehicle in the vehicle width direction.

## Description

### TECHNICAL FIELD

The present invention relates to a straddle-type vehicle.

### BACKGROUND ART

In recent years, a fuel cell vehicle that travels by using electric power generated by a fuel cell has been developed. In a fuel cell vehicle, a hydrogen gas in a hydrogen tank and oxygen in air are chemically reacted in a fuel cell to generate electric power, and the generated electric power is supplied to a motor to drive wheels. As a fuel cell vehicle of this type, there is known a fuel cell vehicle including a relief valve that discharges a hydrogen gas when a pressure in a gas flow path increases to a predetermined pressure or more (for example, see Patent Document 1). In addition to a fuel cell vehicle, a vehicle provided with a gas fuel engine is developed, in which a hydrogen gas is used as gas fuel and combusted in the engine and the vehicle travels by using combustion energy.

### CITATION LIST

### PATENT LITERATURE

Patent Document 1: JP2010-235099A

### SUMMARY OF INVENTION

### TECHNICAL PROBLEM

However, a detailed structure of a supply path of the gas fuel from a gas tank to the engine is not sufficiently studied in the gas fuel engine. For example, similar to the fuel cell vehicle, the gas fuel engine is also provided with a relief valve. But unlike the fuel cell vehicle, the gas fuel engine is provided with an exhaust system component. Since the exhaust system component tends to have a high temperature, the gas fuel may be blown from the relief valve on the high-temperature exhaust system component depending on an installation location of the relief valve.

The present invention has been made in view of the above problem, and an object of the present invention is to provide a straddle-type vehicle suitable for traveling using combustion energy of gas fuel.

### SOLUTION TO PROBLEM

A straddle-type vehicle according to an aspect of the present invention is a straddle-type vehicle that travels by using gas fuel, and the straddle-type vehicle includes a gas tank configured to store the gas fuel, an engine configured to be operated by combustion energy of the gas fuel, an exhaust system component through which an exhaust gas discharged from the engine flows, and a relief valve configured to open when a pressure of the gas fuel rises to a predetermined pressure or more, in which the relief valve has a discharge port oriented downward, the exhaust system component is disposed at one side of the straddle-type vehicle in a vehicle width direction, and the relief valve is disposed at the other side of the straddle-type vehicle in the vehicle width direction, thereby solving the above problem.

### ADVANTAGEOUS EFFECTS OF INVENTION

According to the straddle-type vehicle in the aspect of the present invention, the exhaust system component and the discharge port of the relief valve are separated from each other in the vehicle width direction. Even when the gas fuel is discharged downward from the discharge port of the relief valve, the gas fuel is less likely to be blown on the exhaust system component in high-temperature, and safety of the vehicle is improved.

### BRIEF DESCRIPTION OF DRAWINGS

FIG. 1 is a left side view showing a vehicle internal structure according to the present embodiment.
FIG. 2 is a right side view showing the vehicle internal structure according to the present embodiment.
FIG. 3 is a left side view showing a vehicle body central portion according to the present embodiment.
FIG. 4 is a right side view showing the vehicle body central portion according to the present embodiment.
FIG. 5 is a left side view showing a periphery of a relief valve according to the present embodiment.
FIG. 6 is a bottom view showing the periphery of the relief valve according to the present embodiment.

### DESCRIPTION OF EMBODIMENTS

A straddle-type vehicle according to an aspect of the present invention travels using gas fuel. The gas fuel is stored in a gas tank, and an engine is operated by combustion energy of the gas fuel. An exhaust system component is disposed at one side of the vehicle in a vehicle width direction, and an exhaust gas discharged from the engine flows through the exhaust system component. A relief valve is disposed at the other side of the vehicle in the vehicle width direction. A discharge port of the relief valve is oriented downward, and the relief valve is opened when a pressure of the gas fuel rises to a predetermined pressure or more. Since the exhaust system component and the discharge port of the relief valve are separated from each other in the vehicle width direction, even when the gas fuel is discharged downward from the discharge port of the relief valve, the gas fuel is less likely to be blown on the high-temperature exhaust system component, and safety of the vehicle is improved.

### [Embodiment]

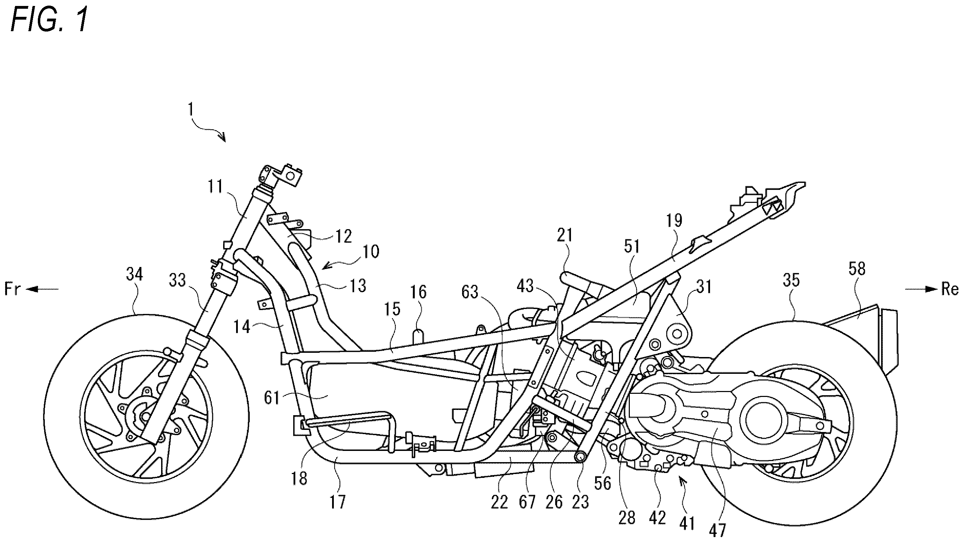

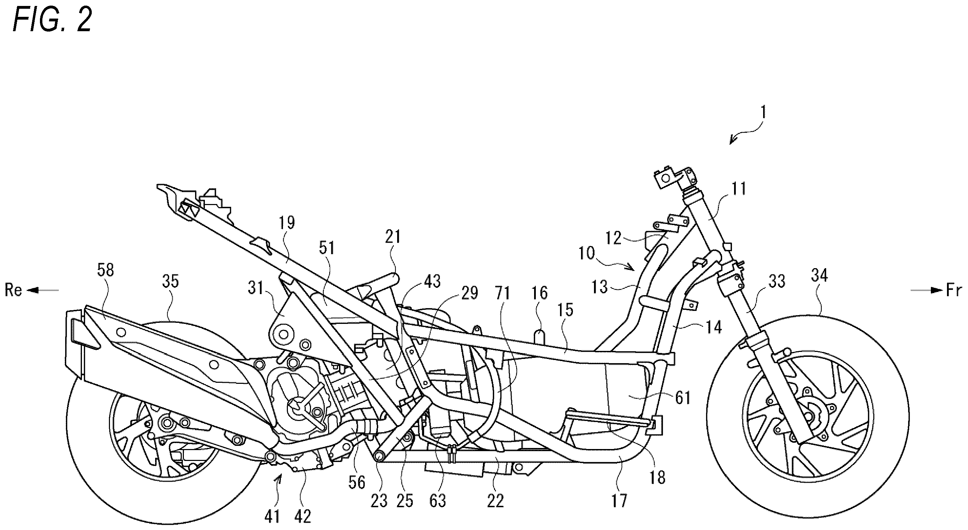

Hereinafter, a straddle-type vehicle according to the present embodiment will be described with reference to the accompanying drawings. FIG. 1 is a left side view showing a vehicle internal structure according to the present embodiment. FIG. 2 is a right side view showing the vehicle internal structure according to the present embodiment. In the following drawings, an arrow Fr indicates a vehicle front side, an arrow Re indicates a vehicle rear side, an arrow L indicates a vehicle left side, and an arrow R indicates a vehicle right side.

As shown in FIGS. 1 and 2, a straddle-type vehicle 1 is implemented by mounting various covers (not shown), as vehicle body exteriors, on a vehicle body frame 10 made of steel or aluminum alloy. A head pipe 11 is provided at a front end portion of the vehicle body frame 10, and a support frame 12 extends obliquely rearward and downward from an upper portion of the head pipe 11. A pair of first down frames 13 branch to the left and right from a lower portion of the support frame 12 and extend downward, and a pair of second down frames 14 branch to the left and right from a lower portion of the head pipe 11 and extend downward. A pair of main frames 15 are connected to lower portions of the pair of first down frames 13 and the pair of second down frames 14.

The pair of main frames 15 extend toward a vehicle rear side, and intermediate portions of the pair of main frames 15 are connected to each other by an upper bridge 16. A pair of side frames 17 being left-right asymmetric extend downward from front ends of the pair of main frames 15. The side frames 17 are bent rearward at a lower portion of the vehicle, and then extend obliquely rearward and upward toward rear portions of the pair of main frames 15. A front half portion of the vehicle body frame 10 is formed in a cradle shape by the pair of main frames 15 and the pair of side frames 17. A pair of foot boards 18 are attached to the pair of side frames 17.

A pair of seat frames 19 extend rearward from rear portions of the pair of main frames 15. A facing interval of the pair of seat frames 19 increases toward the middle of the frames, and then decreased toward rear ends of the frames. The pair of seat frames 19 are formed in an arch shape, and rear end portions of the pair of seat frames 19 are connected to each other. Front portions of the pair of seat frames 19 are connected to each other by an upper bridge 21. Rear portions of the pair of side frames 17 are connected to the upper bridge 21, and the upper bridge 21 is supported by the pair of side frames 17 from below.

A pair of lower frames 22 being left-right asymmetric extend rearward from lower portions of the pair of side frames 17. Rear end portions of the pair of lower frames 22 are connected to each other by a lower bridge 23. A left sub frame 28 extends obliquely rearward and upward from a left end portion of the lower bridge 23, and the seat frame 19 is supported by the left sub frame 28 from below. A right end portion of the lower bridge 23 and an intermediate portion of the right side frame 17 are connected to each other by a side bridge 25. A right sub frame 29 extends obliquely rearward and upward from an intermediate portion of the side bridge 25, and the seat frame 19 is supported by the right sub frame 29 from below.

A front fork 33 is supported on the head pipe 11 so as to be steerable, and a front wheel 34 is rotatably supported on a lower portion of the front fork 33. Agas tank 61 is disposed inside a cradle portion of a front half portion of the vehicle body frame 10, and a tank valve 63 is disposed at a rear end portion of the gas tank 61. Gas fuel such as hydrogen is stored in the gas tank 61, and the tank valve 63 controls inflow and outflow of the gas fuel. The gas fuel is supplied from the tank valve 63 toward an injector (not shown) above a unit swing engine 41 via a plurality of gas fuel supply system components such as pipes and fuel hoses 71.

The unit swing engine (engine) 41 is swingably supported by support plates 31 of the left and right sub frames 28 and 29. The unit swing engine 41 is operated by combustion energy of the gas fuel supplied from the gas tank 61. A cylinder axis of the unit swing engine 41 is inclined forward to be close to horizontal, and a cylinder assembly 43 extends forward of the vehicle from a crankcase 42. The cylinder assembly 43 enters between the left sub frame 28 and the right sub frame 29, and a front end of the cylinder assembly 43 is close to the tank valve 63 of the gas tank 61.

An intake system component such as an air cleaner 51 is connected to an upper portion of the cylinder assembly 43, and an exhaust system component such as an exhaust pipe 56 or a muffler 58 is connected to a lower portion of the cylinder assembly 43. A CVT cover 47 is attached to a left side of the crankcase 42. A rear wheel 35 is rotatably supported on a rear portion of the CVT cover 47. A belt-type continuously variable transmission (not shown) is accommodated inside the CVT cover 47, and a driving force of the unit swing engine 41 is transmitted to the rear wheel 35 via a belt. The muffler 58, the CVT cover 47, the rear wheel 35, and the unit swing engine 41 are swung together with each other.

In the straddle-type vehicle 1 that travels by using gas fuel, a relief valve 67 that injects the gas fuel to a lower side of the vehicle body is installed in order to prevent a pressure rise in the gas fuel supply system components when the tank valve 63 of the gas tank 61 is broken and is not closed. At this time, since the exhaust system component such as the exhaust pipe 56 and the muffler 58 have a high temperature, it is necessary to prevent the gas fuel which is injected from the relief valve 67 from being blown on the exhaust system component. In the present embodiment, the exhaust system component is disposed at one side of the straddle-type vehicle 1 in the vehicle width direction, and the relief valve 67 is disposed at the other side of the straddle-type vehicle 1 in the vehicle width direction.

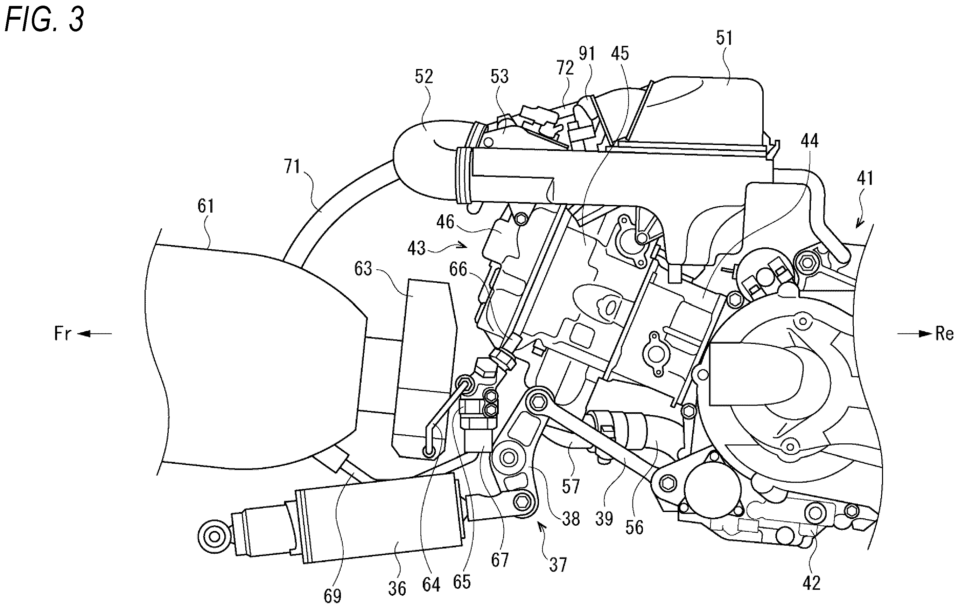

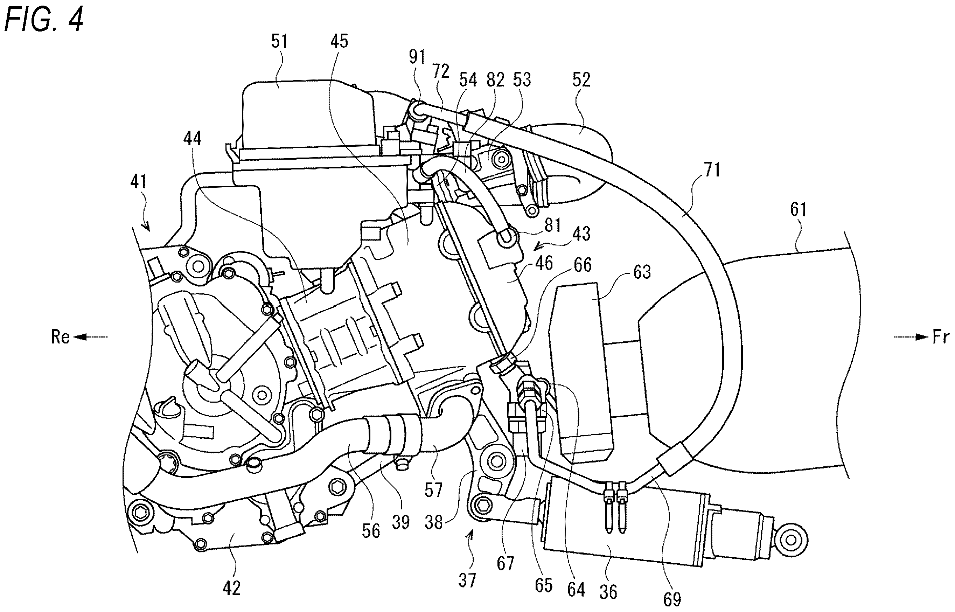

A peripheral structure of the unit swing engine will be described with reference to FIGS. 3 and 4. FIG. 3 is a left side view showing a vehicle body central portion according to the present embodiment. FIG. 4 is a right side view showing the vehicle body central portion according to the present embodiment. In FIGS. 3 and 4, the vehicle body frame is omitted.

As shown in FIGS. 3 and 4, the cylinder assembly 43 of the unit swing engine 41 is formed by stacking a cylinder 44, a cylinder head 45, and a cylinder head cover 46. The air cleaner 51 is disposed above the cylinder head 45. The air cleaner 51 is connected to an intake port at an upper portion of the cylinder head 45 via a U-shaped outlet tube 52, a throttle body 53, and an intake pipe 54. Air is sent from the air cleaner 51 to the throttle body 53 through the outlet tube 52, and an intake amount is adjusted by the throttle body 53, then the air is supplied to the cylinder head 45 through the intake pipe 54.

The exhaust pipe 56 is connected to an exhaust port at a lower portion of the cylinder head 45. The exhaust pipe 56 is formed with a bent portion 57 curved rearward from the cylinder head 45. A portion of the exhaust pipe 56 downstream of the bent portion 57 extends rearward of the vehicle through a right side of the crankcase 42. The muffler 58 (see FIG. 2) inclined obliquely rearward and upward at a right side of the rear wheel 35 is connected to a rear end portion of the exhaust pipe 56. An exhaust gas discharged from the unit swing engine 41 flows through the exhaust pipe 56 and the muffler 58 that are the exhaust system component, and the exhaust pipe 56 and the muffler 58 are warmed up to have a high temperature by the exhaust gas.

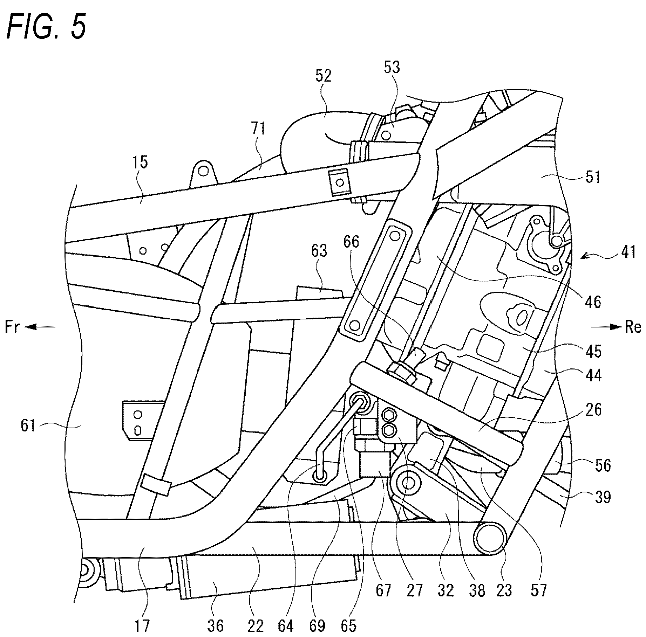

A link mechanism (an attachment member) 37 for attaching a suspension 36 to the vehicle body is provided below the cylinder head 45. The link mechanism 37 is provided with a link lever 38 having an arc shape in a side view, and an intermediate portion of the link lever 38 is swingably coupled to a bracket 32 (see FIG. 5) of the vehicle body frame 10 (the lower bridge 23). A lower portion of the crankcase 42 is swingably coupled to an upper end portion of the link lever 38 via a link arm 39. A rear end portion of the suspension 36 is swingably coupled to a lower end portion of the link lever 38. The suspension 36 expands and contracts as the unit swing engine 41 swings, thereby absorbing vibrations transmitted to the vehicle body.

The gas tank 61 is disposed in front of the unit swing engine 41. The gas tank 61 is formed in a cylindrical shape, and both end portions of the gas tank 61 bulge in a hemispherical shape. A longitudinal direction of the gas tank 61 is oriented in a front-rear direction, and a front end of the gas tank 61 is slightly inclined to be higher than a rear end. The tank valve 63 is disposed at a rear end portion of the gas tank 61. A pipe joint 65 is connected to a relief valve pipe 64 extending obliquely rearward and upward from a lower portion of the tank valve 63. Therefore, the pipe joint 65 is positioned in a space between the tank valve 63 and the cylinder head 45 in a side view.

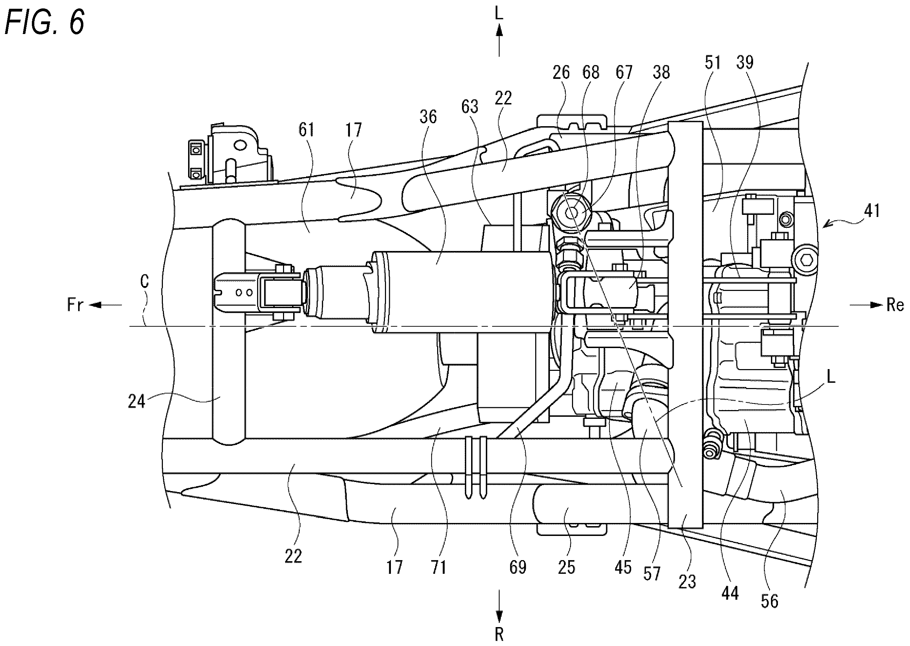

A pressure sensor 66 is attached to an upper portion of the pipe joint 65. The relief valve 67 is attached to a lower portion of the pipe joint 65. The pressure sensor 66 detects a pressure in a gas flow path, and the relief valve 67 is opened when a pressure of gas fuel rises to a predetermined pressure or more. The gas fuel is discharged toward the ground from a discharge port 68 (see FIG. 6) of the relief valve 67. The discharge port 68 is oriented downward. Details will be described later, the pipe joint 65 is positioned at a vehicle body left side (at the other side in the vehicle width direction), and the gas fuel discharged from the relief valve 67 is less likely to be blown on the exhaust pipe 56 at a vehicle body right side.

An injector joint 91 is connected to the pipe joint 65 via an upstream pipe 69, the fuel hose 71, and a downstream pipe 72. The upstream pipe 69 and the downstream pipe 72 are formed of a hard pipe material such as metal. The fuel hose 71 is formed of a soft rubber hose. The upstream pipe 69 crosses below the tank valve 63 and extends from the pipe joint 65 at the vehicle body left side to the vehicle body right side. At the vehicle body right side, a lower end portion of the fuel hose 71 is connected to the upstream pipe 69, and the fuel hose 71 extends upward through a right side of the gas tank 61. An upper end portion of the fuel hose 71 is connected to the injector joint 91 above the cylinder head 45 via the downstream pipe 72.

Accordingly, the relief valve pipe 64, the pipe joint 65, the upstream pipe 69, the fuel hose 71, and the downstream pipe 72 form a gas flow path extending from the gas tank 61 toward the unit swing engine 41. Since a part of the gas flow path is formed by the fuel hose 71, the unit swing engine 41 is allowed to swing by a bending deformation of the fuel hose 71. The relief valve 67 is interposed in an intermediate portion of the gas flow path by attaching the relief valve 67 to the pipe joint 65. The degree of freedom of installing the relief valve 67 can be increased, and the relief valve 67 can be installed at a safer place.

As described above, the pipe joint 65 is integrally formed with an attachment portion of the pressure sensor 66, an attachment portion of the relief valve 67, a connection portion of the relief valve pipe 64, and a connection portion of the upstream pipe 69 (the fuel hose 71). Since the attachment portions and the connection portions are formed with the pipe joint 65, the pressure sensor 66 and the relief valve 67 are compactly installed, and the relief valve pipe 64 and the upstream pipe 69 are compactly connected. The pipe joint 65 is supported, via a bracket 27, by a side bridge 26 (see FIG. 5) that connects the side frame 17 at the vehicle body left side and the left sub frame 28.

The cylinder head cover 46 is provided with a PCV valve 81, and the intake pipe 54 is connected to the PCV valve 81 via a PCV hose 82 (see particularly FIG. 4). The PCV valve 81 is opened when the intake pipe 54 is brought into a negative pressure. A blowby gas in the cylinder head cover 46 is returned to the intake pipe 54 through the PCV hose 82, and the blowby gas is fed into an intake port of the cylinder head 45 and is combusted again. Since the PCV hose 82 is formed of a soft rubber hose, the unit swing engine 41 is allowed to swing by a bending deformation of the PCV hose 82.

A layout of the relief valve will be described with reference to FIGS. 5 and 6. FIG. 5 is a left side view showing a periphery of the relief valve according to the present embodiment. FIG. 6 is a bottom view showing the periphery of the relief valve according to the present embodiment.

As shown in FIGS. 5 and 6, the tank valve 63 of the gas tank 61 is positioned in front of the relief valve 67, and the cylinder head 45 of the unit swing engine 41 is positioned behind the relief valve 67. The suspension 36 is positioned below the gas tank 61. The link lever 38 is positioned below the cylinder head 45. A front end portion of the suspension 36 is coupled to a front lower bridge 24. A rear end portion of the suspension 36 is coupled to the rear lower bridge 23 via the link lever 38. The exhaust pipe 56 extends rearward in a curved manner from a lower portion of the cylinder head 45.

In a bottom view, the exhaust pipe 56 extends rightward and rearward from the cylinder head 45, and the relief valve 67 is supported by the left side bridge 26 via the bracket 27. That is, the exhaust system component is installed on a right side of a vehicle body center line C extending in a vehicle body front-rear direction, and the relief valve 67 is installed on a left side of the vehicle body center line C. The discharge port 68 of the relief valve 67 is positioned in front of the bent portion 57 of the exhaust pipe 56. When the exhaust pipe 56 and the relief valve 67 are separated from each other in a left-right direction, the discharge port 68 is positioned in front of the bent portion 57 at a front end of the exhaust pipe 56, so that gas fuel discharged from the relief valve 67 is less likely to be blown on the exhaust pipe 56.

In a side view, the relief valve 67 is positioned between the tank valve 63 and the bent portion 57 of the exhaust pipe 56, and the discharge port 68 of the relief valve 67 is positioned at the same height as a lower surface of the bent portion 57. Since gas fuel is discharged downward from the discharge port 68 of the relief valve 67, the bent portion 57 is out of a gas fuel discharge range, and the gas fuel is less likely to be directly blown on the high-temperature bent portion 57. The discharge port 68 of the relief valve 67 and the lower surface of the bent portion 57 being positioned at the same height does not necessarily refer to that the discharge port 68 of the relief valve 67 and the lower surface of the bent portion 57 are at exactly the same height, and the discharge port 68 of the relief valve 67 may be positioned at substantially the same height as the lower surface of the bent portion 57.

In a bottom view, the exhaust pipe 56 is disposed on a right side of the suspension 36, and the relief valve 67 is disposed on a left side of the suspension 36. Even when gas fuel is discharged from the discharge port 68 of the relief valve 67, the gas fuel is partially blocked by the suspension 36 and is less likely to be blown on the exhaust pipe 56. In this case, the suspension 36 is disposed on a right side of the vehicle body center line C. Since the suspension 36 is close to the relief valve 67, the gas fuel flowing from the relief valve 67 to the vehicle body right side is effectively blocked by the suspension 36.

In a side view, the bent portion 57 of the exhaust pipe 56 is covered by the link lever 38 (an attachment member) and the link arm 39 from an inner side in the vehicle width direction. In a side view, the link lever 38 is positioned in front of the bent portion 57 of the exhaust pipe 56, and the discharge port 68 of the relief valve 67 is positioned in front of the link lever 38. That is, the link lever 38 is positioned on a straight line L connecting the discharge port 68 of the relief valve 67 and the bent portion 57 of the exhaust pipe 56 in a bottom view. Accordingly, gas fuel flowing from the discharge port 68 of the relief valve 67 toward the bent portion 57 is blocked by the link lever 38 and the link arm 39, and is less likely to be blown on the bent portion 57 of the exhaust pipe 56.

As described above, according to the straddle-type vehicle 1 in the present embodiment, the exhaust pipe 56 and the relief valve 67 are separated from each other in the left-right direction. Even when gas fuel is discharged downward from the discharge port 68 of the relief valve 67, the gas fuel is less likely to be blown on the high-temperature exhaust pipe 56, and safety of the vehicle is improved.

The exhaust pipe is disposed on the vehicle body right side and the relief valve is disposed on the vehicle body left side in the present embodiment. Alternatively, the exhaust pipe may be disposed on the vehicle body left side and the relief valve may be disposed on the vehicle body right side.

The unit swing engine is exemplified as an engine in the present embodiment. Alternatively, the engine is not limited to the unit swing engine as long as the engine is operated by combustion energy of gas fuel.

The engine is a hydrogen engine using hydrogen gas in the present embodiment. Alternatively, the engine may be other gas fuel engines using other gas fuel such as a methane gas and a propane gas.

The cylinder axis of the unit swing engine is inclined forward to be close to horizontal in the present embodiment. Alternatively, the cylinder axis of the unit swing engine may be horizontal.

A single gas tank is provided in the straddle-type vehicle in the present embodiment. Alternatively, a plurality of gas tanks may be provided in the straddle-type vehicle.

The gas tank is formed in a cylindrical shape with both end portions bulging in a hemispherical shape in the present embodiment. Alternatively, the shape of the gas tank is not limited as long as the gas tank has a shape capable of storing gas fuel.

The relief valve is provided at the pipe joint in the present embodiment. Alternatively, the relief valve may be provided in an intermediate portion of the fuel gas flow path. The relief valve may be provided at the tank valve.

The layout of the relief valve according to the present embodiment is not limited to the straddle-type vehicle described above, and may be used in other types of straddle-type vehicles. The straddle-type vehicle is not limited to a general vehicle in which a driver rides on a seat in a posture straddling the seat, and includes a scooter-type vehicle in which the driver rides on the seat without straddling the seat.

As described above, according to a first aspect, a straddle-type vehicle (1) that travels by using gas fuel including: a gas tank (61) configured to store the gas fuel; an engine (the unit swing engine 41) configured to be operated by combustion energy of the gas fuel; an exhaust system component (the exhaust pipe 56) through which an exhaust gas discharged from the engine flows; and a relief valve (67) configured to open when a pressure of the gas fuel rises to a predetermined pressure or more, in which the relief valve has a discharge port (68) oriented downward, the exhaust system component is disposed at one side of the straddle-type vehicle in a vehicle width direction, and the relief valve is disposed at the other side of the straddle-type vehicle in the vehicle width direction. According to this configuration, the exhaust system component and the discharge port of the relief valve are separated from each other in the vehicle width direction. Even when the gas fuel is discharged downward from the discharge port of the relief valve, the gas fuel is less likely to be blown on the exhaust system component in high-temperature, and safety of the vehicle is improved.

According to a second aspect, in the first aspect, the exhaust system component has a bent portion (57) that is curved rearward from the engine, and the discharge port of the relief valve is positioned in front of the bent portion. According to this configuration, since the discharge port of the relief valve is positioned in front of the bent portion of the front end of the exhaust system component, even when the gas fuel is discharged from the discharge port of the relief valve, the gas fuel is less likely to be blown on the exhaust pipe.

According to a third aspect, in the second aspect, the discharge port of the relief valve is positioned at the same height as a lower surface of the bent portion. According to this configuration, since the gas fuel is discharged downward from the discharge port of the relief valve, the bent portion is out of a gas fuel discharge range, and the gas fuel is less likely to be directly blown on the bent portion.

According to a fourth aspect, the straddle-type vehicle according to any one of the first to third aspects includes a suspension (36) configured to absorb vibrations transmitted to a vehicle body, the exhaust system component is disposed at the one side with respect to the suspension in the vehicle width direction, and the relief valve is disposed at the other side with respect to the suspension in the vehicle width direction. According to this configuration, even when the gas fuel is discharged from the discharge port of the relief valve, the gas fuel is blocked by the suspension and is less likely to be blown on the exhaust system component.

According to a fifth aspect, the straddle-type vehicle according to the fourth aspect includes an attachment member (the link lever 38) attaching the suspension to the vehicle body, and the exhaust system component is covered by the attachment member from an inner side in the vehicle width direction in a side view of the straddle-type vehicle. According to this configuration, even when the gas fuel is discharged from the discharge port of the relief valve, the gas fuel flowing from the inner side in the vehicle width direction toward the exhaust system component is blocked by the attachment member, and is less likely to be blown on the exhaust system component.

According to a sixth aspect, the straddle-type vehicle according to the fourth aspect or the fifth aspect includes an attachment member attaching the suspension to the vehicle body, the attachment member is positioned in front of the exhaust system component in a side view of the straddle-type vehicle, and the discharge port of the relief valve is positioned in front of the attachment member. According to this configuration, even when the gas fuel is discharged from the discharge port of the relief valve, the gas fuel flowing from a front side toward the exhaust system component is blocked by the attachment member, and is less likely to be blown on the exhaust system component.

According to a seventh aspect, in any one of the first to sixth aspects, a gas flow path extends from the gas tank toward the engine, and the relief valve is interposed in an intermediate portion the gas flow path. According to this configuration, as compared with a configuration in which the relief valve is attached to the tank valve of the gas tank, the degree of freedom of installing the relief valve can be increased, and the relief valve can be installed at a safer place.

Although the present embodiment is described, a part or all of the embodiment and modifications may be combined as another embodiment.

The technique according to the present invention is not limited to the above-described embodiment, and may be variously changed, replaced, or modified without departing from the gist of the technical concept. Further, the present invention may be implemented by other methods as long as the technical concept can be implemented by the methods through advance of the technique or other derivative techniques. Therefore, the claims cover all embodiments that may fall within the scope of the technical concept.

### REFERENCE SIGNS LIST

1: straddle-type vehicle
36: suspension
37: link mechanism (attachment member)
41: unit swing engine (engine)
56: exhaust pipe (exhaust system component)
57: bent portion
61: gas tank
67: relief valve
68: discharge port

## Claims

1. A straddle-type vehicle that travels by using gas fuel, the straddle-type vehicle comprising:
a gas tank configured to store the gas fuel;
an engine configured to be operated by combustion energy of the gas fuel;
an exhaust system component through which an exhaust gas discharged from the engine flows; and
a relief valve configured to open when a pressure of the gas fuel rises to a predetermined pressure or more, wherein
the relief valve has a discharge port oriented downward, and
the exhaust system component is disposed at one side of the straddle-type vehicle in a vehicle width direction, and the relief valve is disposed at the other side of the straddle-type vehicle in the vehicle width direction.

2. The straddle-type vehicle according to claim 1, wherein
the exhaust system component has a bent portion that is curved rearward from the engine, and
the discharge port of the relief valve is positioned in front of the bent portion.

3. The straddle-type vehicle according to claim 2, wherein
the discharge port of the relief valve is positioned at the same height as a lower surface of the bent portion.

4. The straddle-type vehicle according to claim 1 or 2, further comprising:
a suspension configured to absorb vibrations transmitted to a vehicle body, wherein
the exhaust system component is disposed at the one side with respect to the suspension in the vehicle width direction, and
the relief valve is disposed at the other side with respect to the suspension in the vehicle width direction.

5. The straddle-type vehicle according to claim 4, further comprising:
an attachment member attaching the suspension to the vehicle body, wherein
the exhaust system component is covered by the attachment member from an inner side in the vehicle width direction in a side view of the straddle-type vehicle.

6. The straddle-type vehicle according to claim 4, further comprising:
an attachment member attaching the suspension to the vehicle body, wherein
the attachment member is positioned in front of the exhaust system component in a side view of the straddle-type vehicle, and
the discharge port of the relief valve is positioned in front of the attachment member.

7. The straddle-type vehicle according to claim 1 or 2, wherein
a gas flow path extends from the gas tank toward the engine, and
the relief valve is interposed in an intermediate portion of the gas flow path.
